# EUROPEAN PATENT APPLICATION

(11) **EP 4 654 295 A1**
(43) Date of publication of application: **26.11.2025**
(21) Application number: 24861517.1
(22) Date of filing: 28.04.2024
(51) Int. Cl.: H01M 4/36, H01M 4/38, H01M 4/62

(54) **SILICON COMPOSITE MATERIAL AND PREPARATION METHOD, NEGATIVE ELECTRODE SHEET, BATTERY, AND ELECTRIC DEVICE**

(30) Priority: 06.09.2023 CN 202311143407
(71) Applicant: Contemporary Amperex Technology Co., Limited, Ningde, Fujian 352100 (CN)
(72) Inventor: WU, Kai, Ningde, Fujian 352100 (CN); JIN, Haizu, Ningde, Fujian 352100 (CN); SHI, Dongyang, Ningde, Fujian 352100 (CN); CHEN, Ning, Ningde, Fujian 352100 (CN); DENG, Yaqian, Ningde, Fujian 352100 (CN); LIU, Zhi, Ningde, Fujian 352100 (CN); WANG, Yuzhen, Ningde, Fujian 352100 (CN); WANG, Juan, Ningde, Fujian 352100 (CN)
(74) Representative: Lorenz Seidler Gossel Part. mbB
(86) International application number: PCT/CN2024/090350
(87) International publication number: WO 2025/050667

(57) **Abstract**

A silicon composite material and a preparation method, a negative electrode plate, a battery, and an electrical apparatus. The silicon composite material comprises a silicon-based material and a flexible material, wherein the hardness of the flexible material is less than the hardness of the silicon-based material. The silicon-based material comprises at least one of elemental silicon, a silicon-oxygen compound, a silicon-carbon composite, a silicon-nitrogen composite, and a silicon alloy. The flexible material is located on at least part of the surface of the silicon-based material. By means of the combination of the flexible material and the silicon-based material, the risk of a current collector being crushed during the preparation of an electrode plate can be reduced, and the compacted density of the electrode plate can be improved, thus increasing the energy density of a battery.

## Description

### CROSS-REFERENCE TO RELATED APPLICATIONS

The present application claims priority to Chinese Patent Application No. 2023111434075, filed on September 6, 2023, entitled "SILICON COMPOSITE MATERIAL AND PREPARATION METHOD, NEGATIVE ELECTRODE PLATE, BATTERY, AND ELECTRICAL APPARATUS", which is incorporated herein by reference in its entirety.

### TECHNICAL FIELD

The present application relates to the technical field of secondary batteries, in particular to a silicon composite material and a preparation method, a negative electrode plate, a battery, and an electrical apparatus.

### BACKGROUND

The statements herein provide only background information related to the present application and do not necessarily constitute the prior art.

A silicon-based materials has a high gram capacity, and its introduction into a secondary battery may increase an energy density of the battery. However, the silicon-based material usually has high hardness, which can easily crush a current collector during the preparation of an electrode plate, which restricts the increase of a compacted density of the electrode plate, and then restricts the further increase of the energy density of the battery.

### SUMMARY OF THE INVENTION

To achieve the above object, the present application provides a silicon composite material, including a silicon-based material and a flexible material. Hardness of the flexible material is less than hardness of the silicon-based material, the silicon-based material includes at least one of elemental silicon, a silicon-oxygen compound, a silicon-carbon composite, a silicon-nitrogen composite, and a silicon alloy. The flexible material is located on at least part of the surface of the silicon-based material. In the above silicon composite material, by means of the combination of the flexible material and the silicon-based material, the flexible material can buffer an acting force of the silicon-based material on a current collector, the risk of the current collector being crushed during the preparation of an electrode plate can be reduced, and a compacted density of the electrode plate can be improved, thus increasing an energy density of a battery.

In some embodiments, the flexible material includes a flexible conductive material. The introduction of the flexible conductive material can improve the conductivity of the silicon composite material, thereby improving an electrical property of the battery. Optionally, the flexible conductive material includes at least one of graphite and soft carbon.

In some embodiments, Dv50 of the flexible material is ≤Dv50 of the silicon-based material. The flexible material can be more evenly dispersed on the surface of the silicon-based material, which is beneficial to further improving a buffering effect of the flexible material on the silicon-based material.

In some embodiments, the Dv50 of the flexible material is 1 µm-5 µm. The Dv50 of the flexible material in the range can make the flexible material more evenly dispersed on the surface of the silicon-based material, and at the same time can allow for a more appropriate deformation space between the flexible material, and the appropriate deformation space is beneficial to buffering the acting force between the silicon-based material and the current collector, reducing the risk of the damage of the current collector during the preparation of the electrode plate.

In some embodiments, Dv50 of the silicon-based material is 2 µm-7 µm. The Dv50 of the silicon-based material in the range can make the electrode plate have a high compacted density, which is beneficial to improving the energy density of the battery.

In some embodiments, the silicon-based material and the flexible material are both granular materials, and the flexible material is distributed in a granular form on at least part of the surface of the silicon-based material. The flexible material in a granular distribution can play a better role in buffering. When the sphericity of the silicon-based material is low, i.e., the silicon-based material has sharp protrusions, the flexible material in the granular distribution can better fit with the protrusions, and reduce the risk of the damage caused by the protrusions to the current collector. Optionally, the flexible material is distributed in a granular form on an overall surface of the silicon-based material.

In some embodiments, a mass ratio of the flexible material to the silicon-based material is (1-9): 1. The mass ratio of the flexible material to the silicon-based material in the range can give full play to the buffering effect of the flexible material and reduce the risk of the damage of the current collector. At the same time, the mass ratio of the flexible material to the silicon-based material in the range is beneficial to improving the compacted density of the electrode plate, and thus the battery can maintain a high energy density.

In some embodiments, the silicon-carbon composite includes a porous carbon material and elemental silicon located in pores of the porous carbon material. The pores inside the porous carbon material can provide a certain reserved expansion space for the elemental silicon, reduce the overall expansion of the silicon-carbon composite, and improve the structural stability of the electrode plate during a charging and discharging process.

In some embodiments, a specific surface area of the porous carbon material is 500 m²/g-1800 m²/g. The specific surface area of the porous carbon material in the range can provide a large space for the attachment of the elemental silicon, and promote the improvement of the energy density of the battery.

In some embodiments, a pore size of the pores of the porous carbon material is 2 nm-50 nm. The pore size of the pores of the porous carbon material in the range can provide a large expansion space for the expansion of the elemental silicon, and at the same time make the battery have good cycle performance.

In some embodiments, a mass percentage of the elemental silicon in the silicon-carbon composite is 20%-60%. The mass percentage of the elemental silicon in the range can make the battery have both the high energy density and good cycle stability.

In some embodiments, the silicon composite material further includes a covering layer, the covering layer contains at least one of carbon and a metal oxide, and the covering layer fully covers or partially covers the silicon-based material and the flexible material. The arrangement of the covering layer can carry out a certain barrier to an electrolyte solution, further reduce the risk of direct contact between the electrolyte solution and the silicon-based material, reduce the side reaction between the electrolyte solution and the silicon-based material in the battery, and be beneficial to improving the cycle and fast charging performance of the battery. Optionally, the metal oxide includes at least one of alumina and titanium dioxide.

In some embodiments, a thickness of the covering layer is 5 nm-60 nm. The thickness of the covering layer in the range can maintain a good covering effect and make the silicon composite material have a suitable particle size, which is beneficial to promoting the increase of the compacted density of the electrode plate.

In some embodiments, Dv50 of the silicon composite material is 8 µm-40 µm. The Dv50 of the silicon composite material in the range can provide a path of an appropriate size for the diffusion of lithium ions, and improve the transmission dynamics of the lithium ions.

In some embodiments, a tap density of the silicon composite material is 0.9 g/cm³-1.2 g/cm³. The tap density of the silicon composite material in the range is beneficial to improving the compacted density of the negative electrode plate.

In some embodiments, a specific surface area of the silicon composite material is 0.8 m²/g-1.5 m²/g. The specific surface area of the silicon composite material in this range can make the electrode plate have good dynamic performance.

The present application further provides a preparation method for a silicon composite material, including the following steps: mixing a silicon-based material, a flexible material, and a solvent to obtain a dispersion; wherein hardness of the flexible material is less than hardness of the silicon-based material; the silicon-based material includes at least one of elemental silicon, a silicon-oxygen compound, a silicon-carbon composite, a silicon-nitrogen composite, and a silicon alloy; and spray-drying the dispersion.

In some embodiments, a solid content of the dispersion is 1%-40%.

In some embodiments, a temperature of hot air for spray drying is 150°C-200°C.

In some embodiments, a flow rate of the hot air for the spray drying is 0.08 m³/min-0.2 m³/min.

The present application further provides a negative electrode plate, including a negative electrode current collector and a negative electrode film layer located on at least one surface of the negative electrode current collector. The negative electrode film layer contains the silicon composite material or the silicon composite material prepared by the preparation method.

In some embodiments, a compacted density of the negative electrode plate is 1.3 g/cm³-1.75 g/cm³. The compacted density of the negative electrode plate in the range is beneficial to improving the energy density of the battery.

In some embodiments, a full charge expansion rate of the negative electrode plate is 22%-50%. The full charge expansion rate in the range can make the battery have good cycle stability.

The present application further provides a secondary battery, including the negative electrode plate.

The present application further provides an electrical apparatus, including the secondary battery.

### BRIEF DESCRIPTION OF THE DRAWINGS

In order to provide a clearer explanation of the technical solution of the present application, a brief introduction will be given to the accompanying drawings used in the present application. It is evident that the accompanying drawings described below are only some embodiments of the present application. For those of ordinary skill in the art, other accompanying drawings can also be obtained based on the drawings without any creative effort.
FIG. 1 is a schematic view of a secondary battery according to an embodiment of the present application.
FIG. 2 is an exploded view of a secondary battery according to an embodiment of the present application as shown in FIG. 1.
FIG. 3 is a schematic view of an electrical apparatus in which a secondary battery serves as a power source according to an embodiment of the present application.
FIG. 4 is a schematic structural view of a silicon composite material in an embodiment of the present application.
FIG. 5 is a schematic structural view of a silicon composite material in another embodiment of the present application.

Description of reference numerals:
1. secondary battery; 11. case; 12. electrode assembly; 13. cover plate; 2. electrical apparatus; 3. silicon composite material; 31. silicon-carbon composite; 32. graphite; and 33. covering layer.

To better describe and illustrate embodiments and/or examples of the present invention disclosed herein, reference may be made to one or more accompanying drawings. Additional details or examples used to describe the accompanying drawings are not to be considered as limiting the scope of any of the disclosed invention, the currently described embodiments and/or examples, and the best modes of the present invention currently understood.

### DETAILED DESCRIPTION

For ease of understanding of the present application, the present application will be described below more completely with reference to the accompanying drawings. The accompanying drawings provide preferred embodiments of the present application. However, the present application can be implemented in various forms and is not limited to the embodiments described herein. On the contrary, these embodiments are provided for the purpose of more thoroughly and completely understanding the content disclosed by the present application.

Unless otherwise defined, all technical and scientific terms used herein have the same meanings as commonly understood by those skilled in the field to which the present application belongs. Herein, the terms used in the specification of the present application are only for the purpose of describing specific embodiments and are not intended to limit the present application. The term "and/or" used herein includes any and all combinations of one or more relevant items listed.

The "ranges" disclosed in the present application are defined in the form of lower and upper limits. A given range is defined by selecting a lower limit and an upper limit, and the selected lower and upper limits define the boundaries of the particular range. The range defined in this way may include or may not include end values, and may be arbitrarily combined, that is, any lower limit can be combined with any upper limit to form a range. For example, if the ranges 60-120 and 80-110 are listed for specific parameters, it is understood that the ranges 60-110 and 80-120 are also expected. In addition, if the listed minimum range values are 1 and 2 and if the listed maximum range values are 3, 4, and 5, the following ranges can all be expected: 1-3, 1-4, 1-5, 2-3, 2-4, and 2-5. In the present application, unless otherwise specified, the numerical range "a-b" represents an abbreviated representation of any combination of real numbers between a and b, where a and b are both real numbers. For example, the numerical range "0-5" indicates that all real numbers between "0-5" have been listed herein, and "0-5" is only a shortened representation of these numerical combinations. Additionally, when it is stated that a certain parameter is an integer of ≥2, it is equivalent to disclosing that the parameter is, for example, an integer of 2, 3, 4, 5, 6, 7, 8, 9, 10, 11, 12, etc.

Unless otherwise specified, all the embodiments and optional embodiments of the present application can be combined with each other form new technical solutions.

Unless otherwise specified, all technical features and optional technical features of the present application can be combined with each other to form new technical solutions.

Unless otherwise specified, all steps in the present application may be performed sequentially or may be performed randomly. In some embodiments, it is sequential. For example, the method includes steps (a) and (b), which means that the method may include steps (a) and (b) performed in order, or may include steps (b) and (a) performed in order. For example, reference to "the method may further include step (c)" indicates that step (c) may be added to the method in any order, for example, the method may comprise steps (a), (b), and (c), or steps (a), (c), and (b), or steps (c), (a), and (b), etc.

Unless otherwise specifically stated, "including" and "comprising" mentioned in the present application indicate either open inclusion or closed inclusion. For example, the terms "including" and "comprising" may indicate that other components not listed may be further included or comprised, or only the listed components may be included or comprised.

Unless otherwise specifically stated, in the present application, the term "or" is inclusive. By way of example, the phrase "A or B" indicates "A, B, or both A and B". More specifically, any one of the following conditions satisfies the condition "A or B": A is true or present and B is false or absent; A is false or absent and B is true or present; or both A and B are true or both A and B are present.

Unless otherwise specified, the terms used in the present application have well-known meanings as commonly understood by those skilled in the art. Unless otherwise specified, the numerical values of various parameters mentioned in the present application can be measured by using various measurement methods as commonly used in the art. For example, a test can be carried out following a method given in an example of the present application.

An embodiment of the present application provides a silicon composite material. The silicon composite material includes a silicon-based material and a flexible material. Hardness of the flexible material is less than hardness of the silicon-based material. The silicon-based material comprises at least one of elemental silicon, a silicon-oxygen compound, a silicon-carbon composite, a silicon-nitrogen composite, and a silicon alloy. The flexible material is located on at least part of a surface of the silicon-based material. In the silicon composite material, by means of the combination of the flexible material and the silicon-based material, the flexible material can buffer an acting force of the silicon-based material on a current collector, the risk of the current collector being crushed during the preparation of an electrode plate can be reduced, and a compacted density of the electrode plate can be improved, thus increasing an energy density of a battery.

Optionally, the flexible material is located on an overall surface of the silicon-based material.

Further, when the silicon composite material is applied to a secondary battery, the flexible material is located on at least part of the surface of the silicon-based material, and the flexible material can reduce the risk of direct contact between an electrolyte solution and the silicon-based material, thus can reduce the side reaction between the electrolyte solution and the silicon-based material in the battery, and is beneficial to improving cycle performance of the battery.

In some embodiments, the flexible material includes a flexible conductive material. The introduction of the flexible conductive material can improve the conductivity of the silicon composite material, thereby improving an electrical property of the battery. Optionally, the conductive material includes at least one of graphite and soft carbon. It can be understood that the graphite include at least one of natural graphite and artificial graphite.

In some embodiments, Dv50 of the flexible material is ≤Dv50 of the silicon-based material. At this point, the flexible material can be more evenly dispersed on the surface of the silicon-based material, which is beneficial to further improving a buffering effect of the flexible material on the silicon-based material. Optionally, Dv50 of the flexible material is <Dv50 of the silicon-based material.

It can be understood that in the present application, Dv50 refers to a particle size corresponding to a cumulative particle size distribution number of particles that reaches 50% in a volume cumulative distribution curve, which has a physical meaning that particles with a particle size less than (or greater than) this particle size account for 50%. As an example, Dv50 can be obtained by referring to a GB/T 19077-2016 test method and using a particle size distribution curve obtained by a laser diffraction particle size distribution measuring instrument Mastersizer3000.

As some optional examples of Dv50 of the flexible material, the Dv50 of the flexible material is 1 micron (µm)-5 µm. The Dv50 of the flexible material in the range can make the flexible material more evenly dispersed on the surface of the silicon-based material, and at the same time can allow for a more appropriate deformation space between the flexible material, and the appropriate deformation space is beneficial to buffering the acting force between the silicon-based material and the current collector, reducing the risk of the damage of the current collector during the preparation of the electrode plate. Optionally, the Dv50 of the flexible material may be 1 µm, 2 µm, 3 µm, 4 µm, 5 µm, and the like.

As some optional examples of Dv50 of the silicon-based material, the Dv50 of the silicon-based material is 2 µm-7 µm. The Dv50 of the silicon-based material in the range can make the electrode plate have a high compacted density, which is beneficial to improving the energy density of the battery. Optionally, the Dv50 of the silicon-based material may be 2 µm, 3 µm, 4 µm, 5 µm, 6 µm, 7 µm, and the like.

It can be understood that flexible material and the silicon-based material may be combined together by the surface tension of the flexible material and the silicon-based material. Optionally, the silicon composite material may further include a binder. The bonding force between the flexible material and the silicon-based material can be further improved by the binder, so that the flexible material and the silicon-based material can be better combined together, and the structural stability of the silicon composite material can be further improved. Optionally, the binder may be at least one of polyvinylpyrrolidone, polyethylene glycol, and sodium carboxymethyl cellulose.

In some embodiments, the silicon-based material and the flexible material are both granular materials, and the flexible material is distributed in a granular form on at least part of the surface of the silicon-based material. The flexible material in a granular distribution can play a better role in buffering. When the sphericity of the silicon-based material is low, i.e., the silicon-based material has sharp protrusions, the flexible material in the granular distribution can better fit with the protrusions, and reduce the risk of the damage caused by the protrusions to the current collector. Optionally, the flexible material is distributed in a granular form on an overall surface of the silicon-based material.

In some embodiments, a mass ratio of the flexible material to the silicon-based material is (1-9): 1. The mass ratio of the flexible material to the silicon-based material in the range can give full play to the buffering effect of the flexible material and reduce the risk of the damage of the current collector. At the same time, the mass ratio of the flexible material to the silicon-based material in the range can make the battery maintain a high energy density. Optionally, the mass ratio of the flexible material to the silicon-based material may be 1:1, 2:1, 3:1, 4:1, 5:1, 6:1, 7:1, 8:1, 9:1, etc.

In some embodiments, the silicon-oxygen compound includes a material having a chemical formula of SiOₓ, where 0<x<2. Further optionally, 0.5≤x≤1.5. Further optionally, the silicon-oxygen compound includes SiO.

Further optionally, a metallic element may also be distributed on the surface of the silicon-oxygen compound and/or inside the silicon-oxygen compound to reduce a proportion of an irreversible phase (e.g., SiO₂) and to increase the efficiency of an active material. The metal may be at least one selected from the group consisting of Li, Mg and Al. The introduction of these metallic elements can reduce the risk of damage to the silicon-oxygen compound and improve the life of the silicon-oxygen compound. Optionally, the metal may be at least one of Li and Mg. A mass percentage of the metallic element may be 0.1%-25%, optionally 3%-15%, in terms of a mass percentage in the silicon-oxygen compound.

Optionally, the silicon-nitrogen composite includes Si₃N₄.

In some embodiments, the silicon-carbon composite includes a porous carbon material and elemental silicon located in pores of the porous carbon material. The pores inside the porous carbon material can provide a certain reserved expansion space for the elemental silicon, reduce the overall expansion of the silicon-carbon composite, and improve the structural stability of the electrode plate during a charging and discharging process. Optionally, the elemental silicon includes nano-silicon.

The silicon-carbon composite usually has a hard texture. When the silicon-carbon composite is applied to the electrode plate, the hard-texture silicon-carbon composite may bring some damage to the current collector during a cold pressing process, and then bring adverse effects to the performance of the electrode plate and the battery. In the present application, by the combination of the flexible material and the silicon-carbon composite, the flexible material is softer in texture than the silicon-carbon composite, so as to disperse the stress brought by the silicon-carbon composite during the cold pressing process, reduce the adverse effect of the silicon-carbon composite on the current collector during the cold pressing process, and further improve the structural stability of the electrode plate, thereby improving the performance of the battery.

Further, the silicon-carbon composite has a poor pressure bearing capacity and is prone to breakage during the cold pressing process. In the present application, the silicon composite material can have a good pressure bearing capacity by the combination of the flexible material and the silicon-carbon composite. When the silicon composite material is introduced into the electrode plate, the compacted density of the electrode plate is further improved.

In some embodiments, a specific surface area of the porous carbon material is 500 square meters per gram (m²/g)-1800 m²/g. The specific surface area of the porous carbon material in the range can provide a large space for the attachment of the elemental silicon, and promote the improvement of the energy density of the battery. Optionally, the specific surface area of the porous carbon material may be 500 m²/g, 600 m²/g, 700 m²/g, 800 m²/g, 900 m²/g, 1000 m²/g, 1100 m²/g, 1200 m²/g, 1300 m²/g, 1400 m²/g, 1500 m²/g, 1600 m²/g, 1700 m²/g, 1800 m²/g, etc.

In some embodiments, a pore size of the pores of the porous carbon material is 2 nanometers (nm)-50 nm. The pore size of the pores of the porous carbon material in the range can provide a large expansion space for the expansion of the elemental silicon, and at the same time make the battery have good cycle performance and storage performance. Optionally, the pores of the porous carbon material are mesopores.

In some embodiments, a mass percentage of the elemental silicon in the silicon-carbon composite is 20%-60%. The mass percentage of the elemental silicon in the range can make the battery have both the high energy density and good cycle stability. Optionally, the mass percentage of the elemental silicon in the silicon-carbon composite may be 20%, 30%, 40%, 50%, 60%, etc.

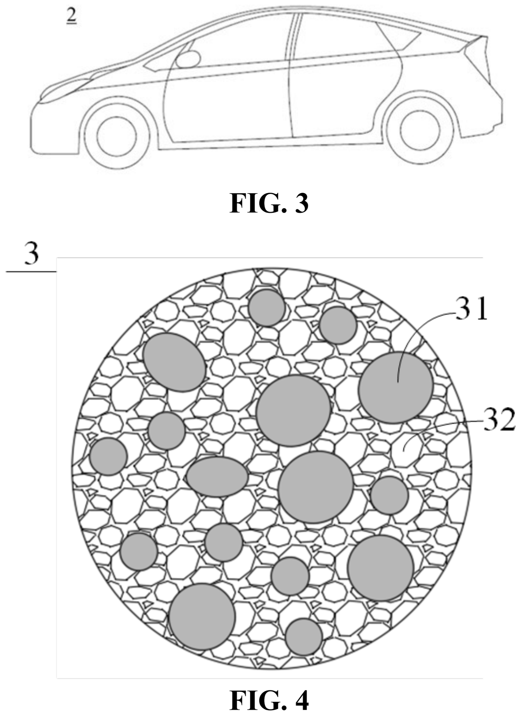

In some embodiments, the flexible material includes graphite, and the silicon-based material includes a silicon-carbon composite. See FIG. 4 for a structural illustration of a silicon composite material in an embodiment of the present application. The silicon composite material 3 corresponding to FIG. 4 includes a silicon-carbon composite 31 and graphite 32, and the graphite 32 is located on at least part of a surface of the silicon-carbon composite 31. It can be understood that in FIG. 4, a positional relationship of the silicon composite material 3, the silicon-carbon composite 31, and the graphite 32 is schematized, and it does not mean that actual shapes of the silicon composite material 3, the silicon-carbon composite 31, and the graphite 32 are shapes shown in FIG. 4. In the silicon composite material, the shapes of the silicon composite material, the silicon-carbon composite and the graphite can be other shapes. For example, the shapes of the silicon composite material, the silicon-carbon composite, and the graphite may be independently selected from at least one of a spherical shape and a quasi-spherical shape respectively.

In some embodiments, the silicon composite material further includes a covering layer, the covering layer contains at least one of carbon and a metal oxide, and the covering layer fully covers or partially covers the silicon-based material and the flexible material. The arrangement of the covering layer can carry out a certain barrier to an electrolyte solution, further reduce the risk of direct contact between the electrolyte solution and the silicon-based material, reduce the side reaction between the electrolyte solution and the silicon-based material in the battery, and be beneficial to improving the cycle and fast charging performance of the battery. Optionally, the covering layer may be a carbon covering layer.

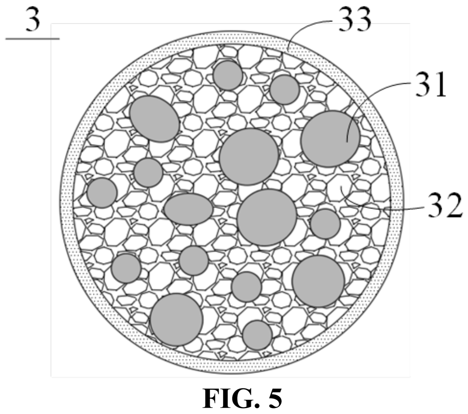

See FIG. 5 for a structural illustration of a silicon composite material in another embodiment of the present application. The silicon composite material 3 corresponding to FIG. 5 includes a silicon-carbon composite 31 and graphite 32, and the graphite 32 is located on at least part of a surface of the silicon-carbon composite 31. The silicon composite material 3 further includes a covering layer 33. The covering layer 33 completely covers the silicon-carbon composite 31 and the graphite 32.

In some embodiments, a metal oxide includes at least one of alumina and titanium dioxide.

In some embodiments, a thickness of the covering layer is 5 nm-60 nm. The thickness of the covering layer in the range can maintain a good covering effect and make the silicon composite material have a suitable particle size, which is beneficial to promoting the increase of the compacted density of the electrode plate. Optionally, the thickness of the covering layer may be 5 nm, 10 nm, 20 nm, 30 nm, 40 nm, 50 nm, 60 nm, etc.

It can be understood that the flexible material, the silicon-carbon composite, and the covering layer in the silicon composite material can be detected and differentiated by means of a transmission electron microscopy (TEM), X ray diffraction (XRD), and the like.

In some embodiments, Dv50 of the silicon composite material is 8 µm-40 µm. The Dv50 of the silicon composite material in the range can provide a path of an appropriate size for the diffusion of lithium ions, and improve the transmission dynamics of the lithium ions. Optionally, Dv50 of the silicon composite material may be 8 µm, 10 µm, 15 µm, 20 µm, 25 µm, 30 µm, 35 µm, 40 µm, etc.

In some embodiments, a tap density of the silicon composite material is 0.9 gram per cubic centimeter (g/cm³)-1.2 g/cm³. The tap density of the silicon composite material in the range is beneficial to improving the compacted density of the negative electrode plate. Optionally, the tap density of the silicon composite material is 0.9 g/cm³, 1 g/cm³, 1.1 g/cm³, 1.2 g/cm³, etc. It can be understood that the tap density of the silicon composite material can be measured by a tap density meter. A graduated cylinder filled with the silicon composite material is fixed on a mechanical vibration apparatus, a vibration motor drives the mechanical vibration apparatus to vibrate vertically up and down, and the graduated cylinder filled with the silicon composite material vibrates rhythmically with the mechanical vibration apparatus. With the increase of the number of vibrations, the silicon composite material in the graduated cylinder gradually vibrates to solidity, when the number of vibrations reaches a set number, the mechanical vibration apparatus stops vibrating and reads a volume of the graduated cylinder, and the tap density of the silicon composite material is calculated according to the definition of density: mass divided by volume.

In some embodiments, a specific surface area of the silicon composite material is 0.8 m²/g-1.5 m²/g. The specific surface area of the silicon composite material in this range can make the electrode plate have good dynamic performance. Optionally, the specific surface area of the silicon composite material is 0.8 m²/g, 0.9 m²/g, 1 m²/g, 1.1 m²/g, 1.2 m²/g, 1.3 m²/g, 1.4 m²/g, 1.5 m²/g, etc.

In some embodiments, the silicon composite material is spherical particles.

An embodiment of the present application further provides a preparation method for a silicon composite material. The preparation method for the silicon composite material includes the following steps: a silicon-based material, a flexible material, and a solvent are mixed to obtain a dispersion; wherein hardness of the flexible material is less than hardness of the silicon-based material; the silicon-based material includes at least one of elemental silicon, a silicon-oxygen compound, a silicon-carbon composite, a silicon-nitrogen composite, and a silicon alloy; and the dispersion is spray-dried. The preparation method is simple and easy, and the silicon composite material can be obtained through a spray drying granulation mode.

Optionally, spray drying is performed in a dry hot air atmosphere. It can be understood that during spray drying, the dispersion is dried in the hot air atmosphere.

In some embodiments, a temperature of hot air for spray drying is 150 degrees Celsius (°C)-200°C. Optionally, the temperature of the hot air for the spray drying may be 150°C, 160°C, 170°C, 180°C, 190°C, 200°C, etc.

In some embodiments, a flow rate of the hot air for the spray drying is 0.08 cubic meters per minute (m³/min)-0.2 m³/min. Optionally, the flow rate of the hot air for the spray drying is 0.08 m³/min, 0.09 m³/min, 0.1 m³/min, 0.11 m³/min, 0.12 m³/min, 0.13 m³/min, 0.14 m³/min, 0.15 m³/min, 0.16 m³/min, 0.17 m³/min, 0.18 m³/min, 0.19 m³/min, 0.2 m³/min, etc.

In some embodiments, a solid content of the dispersion is 1%-40%. Optionally, the solid content of the dispersion is 1%, 5%, 8%, 10%, 15%, 20%, 25%, 30%, 35%, 40%, etc.

In some embodiments, the solvent includes water.

In some embodiments, the preparation method for the silicon composite material includes the following steps: a silicon-based material, a flexible material, a dispersant, and a solvent are mixed to obtain a dispersion; and the dispersion is spray-dried. The dispersing effect of the silicon-based material and the flexible material in the solvent can be improved by adding the dispersant, which is beneficial to improving the uniformity of the silicon composite material.

Optionally, a ratio of the total mass of the silicon-based material and the flexible material to the mass of the dispersant is (70-95):(5-30). Further optionally, the ratio of the total mass of the silicon-based material and the flexible material to the mass of the dispersant may be 70:30, 75:25, 80:20, 85:15, 90:10, 95:5, etc. Further optionally, the dispersant includes one or more of polyvinylpyrrolidone, polyethylene glycol, and sodium carboxymethyl cellulose.

In some embodiments, the preparation method for the silicon composite material includes the following steps: a silicon-based material, a flexible material, a dispersant, a binder, and a solvent are mixed to obtain a dispersion; and the dispersion is spray-dried. Addition of the binder can improve bonding performance between the silicon-carbon composite and graphite, and make the structure of the obtained silicon composite material more stable.

Optionally, the binder includes one or more of polyvinylpyrrolidone, polyethylene glycol, and sodium carboxymethyl cellulose.

It can be understood that the dispersion can be spray-dried using a spray dryer.

In some embodiments, the spray drying is further followed by covering a solid material obtained by the spray drying.

In some embodiments, the spray drying is further followed by carbon-covering the solid material obtained by the spray drying in a gas carbon source atmosphere. The conductivity and fast charging performance of the silicon composite material can be improved by carbon covering.

Optionally, the carbon covering includes the following steps: the solid material obtained by spray drying is placed in a combustion boat, and then the combustion boat is put into a tubular furnace with an Ar gas as a protective gas, a temperature is increased to 600°C-800°C at a heating rate of 2°C-10°C, and the temperature is maintained for 1 hour (h)-4h. The Ar gas is then replaced with a gas carbon source for 15 minutes (min)-30min, and then cooling is performed to a room temperature. Further optionally, the gas carbon source includes at least one of CH₄ and C₂H₂.

Another embodiment of the present application provides a negative electrode plate. The negative electrode plate includes a negative electrode current collector and a negative electrode film layer located on at least one surface of the negative electrode current collector. The negative electrode film layer contains the above silicon composite material or the silicon composite material prepared by the above preparation method for the silicon composite material.

In some embodiments, a compacted density of the negative electrode plate is 1.3 g/cm³-1.75 g/cm³. The compacted density of the negative electrode plate in the range is beneficial to improving the energy density of the battery. For example, the compacted density of the negative electrode plate can be 1.3 g/cm³, 1.4 g/cm³, 1.5 g/cm³, 1.6 g/cm³, 1.7 g/cm³, etc.

In some embodiments, a full charge expansion rate of the negative electrode plate is 22%-50%. The full charge expansion rate in the range can make the battery have good cycle stability. Optionally, the full charge expansion rate of the negative electrode plate may be 25%, 30%, 35%, 40%, 45%, etc. It can be understood that the full charge expansion rate of the negative electrode plate can be measured in the following way: an original thickness of the negative electrode plate is measured and recorded as W0. Then, the assembled battery is fully charged and disassembled, and the thickness of the fully charged negative electrode plate is measured and recorded as W1. Expansion rate α=(W1-WO)/WO.

Another embodiment of the present application provides a secondary battery. The secondary battery includes the above negative electrode plate.

Another embodiment of the present application provides an electrical apparatus. The electrical apparatus includes the above battery.

The secondary battery and the electrical apparatus of the present application are described below with reference to the accompanying drawings properly.

Generally, the secondary battery comprises a positive electrode plate, a negative electrode plate, an electrolyte, and a separator. During the charging and discharging process of the battery, active ions are intercalated and deintercalated back and forth between the positive electrode plate and the negative electrode plate. The electrolyte plays a role in conducting ions between the positive electrode plate and negative electrode plate. The separator is arranged between the positive electrode plate and the negative electrode plate and mainly serves to prevent a short circuit between the positive and negative electrodes while allowing ions to pass through.

### Positive electrode plate

The positive electrode plate comprises a positive electrode current collector and a positive electrode film layer arranged on at least one surface of the positive electrode current collector, and the positive electrode film layer comprises a positive electrode active material.

By way of example, the positive electrode current collector has two surfaces opposite to each other in a thickness direction of the positive electrode current collector, and the positive electrode active material layer is arranged on either or both of the two opposite surfaces of the positive electrode current collector.

In some embodiments, the positive electrode current collector can be a metal foil or a composite current collector. For example, as the metal foil, an aluminum foil can be used. The composite current collector can comprise a polymer material substrate layer and a metal layer formed on at least one surface of the polymer material substrate layer. The composite current collector can be formed by forming a metal material on the polymer material substrate. Optionally, the metal material can include, but is not limited to, one or more of aluminum, an aluminum alloy, nickel, a nickel alloy, titanium, a titanium alloy, silver, and a silver alloy. Optionally, the polymer material substrate can include, but is not limited to, one or more of polypropylene (PP), polyethylene terephthalate (PET), polybutylene terephthalate (PBT), polystyrene (PS), and polyethylene (PE).

By way of example, the positive electrode active material can include a positive electrode active material well-known in the art for batteries. By way of example, the positive electrode active material can comprise at least one of the following materials: a lithium-containing phosphate with an olivine structure, a lithium transition metal oxide, and respective modified compounds thereof. However, the present application is not limited to these materials, and other conventional materials that can be used as positive electrode active materials for batteries may also be used. Only a single one of or a combination of two or more of these positive electrode active materials can be used. Examples of the lithium transition metal oxide can include, but are not limited to, at least one of lithium-cobalt oxide, lithium-nickel oxide, lithium-manganese oxide, lithium-nickel-cobalt oxide, lithium-manganese-cobalt oxide, lithium-nickel-manganese oxide, lithium-nickel-cobalt-manganese oxide, lithium-nickel-cobalt-aluminum oxide, modified compounds thereof, etc. Optionally, the lithium-cobalt oxide includes LiCoO₂; the lithium-nickel oxide includes LiNiO₂; the lithium-manganese oxide includes at least one of LiMnO₂ and LiMn₂O₄; the lithium-nickel-cobalt-manganese oxide includes at least one of LiNi_{1/3}Co_{1/3}Mn_{1/3}O₂ (NCM₃₃₃), LiNi_{0.5}Co_{0.2}Mn_{0.3}O₂ (NCM₅₂₃), LiNi_{0.5}Co_{0.25}Mn_{0.25}O₂ (NCM₂₁₁), LiNi_{0.6}Co_{0.2}Mn_{0.2}O₂ (NCM₆₂₂), and LiNi_{0.8}Co_{0.1}Mn_{0.1}O₂ (NCM₈₁₁); and the lithium-nickel-cobalt-aluminum oxide includes LiNi_{0.85}Co_{0.15}Al_{0.05}O₂. Examples of the lithium-containing phosphate with an olivine structure can include, but are not limited to, at least one of lithium iron phosphate, a composite material of lithium iron phosphate and carbon, lithium manganese phosphate, a composite material of lithium manganese phosphate and carbon, lithium iron manganese phosphate, and a composite material of lithium iron manganese phosphate and carbon. Optionally, the lithium iron phosphate includes LiFePO₄ (LFP); and the lithium manganese phosphate includes LiMnPO₄. The weight ratio of the positive electrode active material in the positive electrode film layer is 80 weight% (wt%)-100 wt%, based on the total weight of the positive electrode film layer.

In some embodiments, the positive electrode film layer further optionally includes a binder. By way of example, the binder can include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin. The weight ratio of the binder in the positive electrode film layer is 0-20 wt%, based on the total weight of the positive electrode film layer.

In some embodiments, the positive electrode film layer further optionally includes a conductive agent. By way of example, the conductive agent can include at least one of superconducting carbon, acetylene black, carbon black, Ketjen black, carbon dots, carbon nanotubes, graphene, and carbon nanofibers. The weight ratio of the conductive agent in the positive electrode film layer is 0-20 wt%, based on the total weight of the positive electrode film layer.

In some embodiments, the positive electrode plate can be prepared by dispersing the above components for preparing the positive electrode plate, for example, the positive electrode active material, the conductive agent, the binder, and any other components, in a solvent to form a positive electrode slurry. Optionally, the solvent includes N-methyl pyrrolidone. The positive electrode slurry has a solid content of 40 wt%-80 wt% and a viscosity adjusted to 5000 millipascal·second (mPa·s)-25000 mPa·s at a room temperature. The positive electrode slurry is applied to a surface of the positive electrode current collector, dried, and then cold-pressed by a cold rolling mill to form the positive electrode plate. The coating unit area density of the positive electrode powder is 15 milligrams/square centimeter (mg/cm²)-35 mg/cm², and the compacted density of the positive electrode plate is 3.0 g/cm³-3.6 g/cm³, optionally 3.4 g/cm³-3.6 g/cm³. The calculation formula of the compacted density is: compacted density=coating area density/(thickness of electrode plate after pressing-thickness of current collector).

It can be understood that positive electrode plate in the embodiment of the present application may be made by using the above positive electrode plate as a positive electrode plate body and forming a solid electrolyte interface film on a surface of the positive electrode plate body.

### Negative electrode plate

The negative electrode plate comprises a negative electrode current collector and a negative electrode film layer arranged on at least one surface of the negative electrode current collector, and the negative electrode film layer comprises a negative electrode active material.

For example, the negative electrode current collector has two surfaces opposite to each other in a thickness direction of the negative electrode current collector, and the negative electrode film layer is arranged on either or both of the two opposite surfaces of the negative electrode current collector.

In some embodiments, the negative electrode current collector can be a metal foil or a composite current collector. For example, as the metal foil, a copper foil can be used. The composite current collector can comprise a polymer material substrate layer and a metal layer formed on at least one surface of the polymer material substrate. The composite current collector can be formed by forming a metal material on the polymer material substrate. Optionally, the metal material includes at least one of copper, a copper alloy, nickel, a nickel alloy, titanium, a titanium alloy, silver, and a silver alloy; and the polymer material includes at least one of polypropylene (PP), polyethylene terephthalate (PET), polybutylene terephthalate (PBT), polystyrene (PS), and polyethylene (PE).

In some embodiments, the negative electrode active material can be a negative electrode active material well known in the art for batteries. As an example, the negative electrode active material may include a silicon composite material in embodiments of the present application. The negative electrode active material may further include at least one of the following materials: artificial graphite, natural graphite, soft carbon, hard carbon, a tin-based material, lithium titanate, and the like. The tin-based material can be selected from at least one of elemental tin, a tin-oxygen compound, and a tin alloy. However, the negative electrode active material is not limited to these materials, and other conventional materials useful as negative electrode active materials for batteries can also be used. One of these negative electrode active materials may be used alone, or two or more of these negative electrode active materials may be used in combination. The weight ratio of the negative electrode active material in the negative electrode film layer is 70 wt%-100 wt%, based on the total weight of the negative electrode film layer.

As natural graphite, unprocessed natural graphite such as flaky graphite, imprinted graphite and amorphous graphite, or spherical natural graphite can be used. The flake graphite and the stamp graphite show almost complete crystals, while the amorphous graphite has low crystallinity. In view of the electrode capacity, high-crystallinity flake graphite and imprinted graphite can be used. For example, the flaky graphite can be spheroidized for use. In the case of spheroidized natural graphite, the particle size may be 5 µm to 30 µm, optionally 10 µm to 25 µm.

Artificial graphite can generally be produced by the graphitization method of sintering coal tar, coal tar pitch, petroleum heavy oil and other raw materials at above 2500°C, after such graphitization, crushing, and forming secondary particles and other particles. It can also be used as an negative electrode active substance.

Generally speaking, the crystals of artificial graphite are randomly distributed in the particle, compared with natural graphite, the sphericity is lower, and the shape is sharper. The artificial graphite may be powdery, flaky, massive acidic, plate or rod-like, but preferably the degree of orientation of the grains is isotropic to shorten the movement distance of the lithium ions to improve the output characteristics. The artificial graphite may be in the form of a sheet and/or a plate.

Artificial graphite includes commercially widely used mesophase carbon beads (MCMB), mesophase pitch-based carbon fibers (MPCF), lump graphitized artificial graphite, powdered graphitized artificial graphite, graphite, etc. In addition, the particle size of the artificial graphite can be 5 µm-30 µm, optionally 10 µm-25 µm.

The specific surface area of artificial graphite can be measured by a Brunauer-Emmett-Teller (BET) method. For example, a porosity analyzer (Bell Japan Inc, Belsorp-II mini) is used, and the specific surface area can be measured by the BET 6-point method using a nitrogen adsorption flow method. The same is true for the measurement of the specific surface area of natural graphite described below.

In some embodiments, the negative electrode film layer further optionally includes a binder. The binder can be selected from at least one of styrene butadiene rubber (SBR), polyacrylic acid (PAA), sodium polyacrylate (PAAS), polyacrylamide (PAM), polyvinyl alcohol (PVA), sodium alginate (SA), polymethacrylic acid (PMAA), and carboxymethyl chitosan (CMCS). The weight ratio of the binder in the negative electrode film layer is 0-30 wt%, based on the total weight of the negative electrode film layer.

In some embodiments, the negative electrode film layer further optionally includes a conductive agent. The conductive agent can be selected from at least one of superconducting carbon, acetylene black, carbon black, Ketjen black, carbon dots, carbon nanotubes, graphene, and carbon nanofibers. The weight ratio of the conductive agent in the negative electrode film layer is 0-20 wt%, based on the total weight of the negative electrode film layer.

In some embodiments, the negative electrode film layer further optionally includes other auxiliaries, for example, a thickener. The weight ratio of the other auxiliaries in the negative electrode film layer is 0-15 wt%, based on the total weight of the negative electrode film layer. Optionally, the thickener includes sodium carboxymethylcellulose (CMC-Na).

In some embodiments, the negative electrode film layer may be a single layer or may be a multi-layer. When the negative electrode film layer is the multi-layer, active materials of any two layers may be the same or not.

In some embodiments, the negative electrode plate can be prepared by dispersing the above components for preparing the negative electrode plate, for example, the negative electrode active material, the conductive agent, the binder, and any other components, in a solvent to form a negative electrode slurry. Optionally, the solvent includes deionized water. The negative electrode slurry has a solid content of 30-70 wt% and a viscosity adjusted to 2000 mPa·s-10000 mPa·s at a room temperature. The obtained negative electrode slurry is applied to a surface of the negative electrode current collector, dried, and cold-pressed to form the negative electrode plate. The coating unit area density of the negative electrode powder is 75 milligrams per square meter (mg/m²)-220 mg/m², and the compacted density of the negative electrode plate is 1.2 g/m³-2.0 g/m³.

It can be understood that negative electrode plate in the embodiment of the present application may be made by using the above negative electrode plate as a negative electrode plate body and forming a solid electrolyte interface film on a surface of the negative electrode plate body.

### Electrolyte

The electrolyte plays a role in conducting ions between the positive electrode plate and negative electrode plate. The type of the electrolyte is not specifically limited in the present application and can be selected according to requirements. For example, the electrolyte can be liquid, gelled, or all solid.

In some embodiments, the electrolyte is an electrolyte solution. The electrolyte solution comprises an electrolyte salt and a solvent.

In some embodiments, the electrolyte salt can be selected from one or more of lithium hexafluorophosphate (LiPF₆), lithium tetrafluoroborate (LiBF₄), lithium perchlorate (LiClO₄), lithium hexafluoroarsenate (LiAsF₆), lithium bis(fluorosulfonyl)imide (LiFSI), lithium bis(trifluoromethanesulfonyl)imide (LiTFSI), lithium trifluoromethanesulfonate (LiTFS), lithium difluoro(oxalato)borate (LiDFOB), lithium bis(oxalato)borate (LiBOB), lithium difluorophosphate (LiPO₂F₂), lithium difluoro bis(oxalato)phosphate (LiDFOP), and lithium tetrafluoro(oxalato)phosphate (LiTFOP). The concentration of the electrolyte salt is generally 0.5-5 moles/liter (mol/L).

In some embodiments, the solvent can be selected from one or more of fluoroethylene carbonate (FEC), ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), methylsulfonylmethane (MSM), ethyl methyl sulfone (EMS), and diethyl sulfone (ESE).

In some embodiments, the electrolyte solution further comprises optionally an additive. For example, the additive can include a negative electrode film-forming additive and a positive electrode film-forming additive and can further include additives that can improve some properties of the battery, for example, an additive that improves the overcharging performance of the battery and an additive that improves the high- or low-temperature performance of the battery.

### Separator

In some embodiments, the secondary battery further comprises a separator. The type of the separator is not particularly limited in the present application, and any well-known separator with a porous structure having good chemical stability and mechanical stability can be selected.

In some embodiments, the material of the separator can be selected from at least one of glass fibers, non-woven fabric, polyethylene, polypropylene, and polyvinylidene fluoride. The separator can be either a single-layer thin film or a multilayer composite thin film without special limitations. When the separator is a multilayer composite thin film, the materials of the layers can be the same or different without special limitations.

In some embodiments, the positive electrode plate, the negative electrode plate, and the separator can be made into an electrode assembly by a winding process or a lamination process.

In some embodiments, the secondary battery can comprise an outer package. The outer packaging can be used for encapsulating the above electrode assembly and electrolyte.

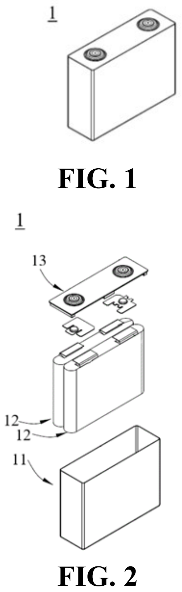

In some embodiments, the outer package of the secondary battery can be a hard shell, such as a hard plastic shell, an aluminum shell, or a steel shell. The outer package of the secondary battery can also be a soft package, such as a pouch-type soft package. The material of the soft package can be plastic, and examples of the plastic can include polypropylene, polybutylene terephthalate, polybutylene succinate, etc. The shape of the secondary battery is not particularly limited in the present application, and the secondary battery can be cylindrical, prismatic, or in any other shape. For example, FIG. 1 is a secondary battery 1 with a prismatic structure as an example.

In some embodiments, referring to FIG. 2, the outer package may include a case 11 and a cover plate 13. The case 11 may include a bottom plate and a side plate connected to the bottom plate, and the bottom plate and the side plate enclose to form an accommodating cavity. The case 11 has an opening in communication with the accommodating cavity, and the cover plate 13 can cover the opening to close the accommodating cavity. The positive electrode plate, the negative electrode plate, and the separator may form the electrode assembly 12 by a winding process or a stacking process. The electrode assembly 12 is encapsulated into the accommodating cavity. An electrolyte solution infiltrates into the electrode assembly 12. The number of electrode assemblies 12 contained in the secondary battery 1 can be one or more and can be selected by those skilled in the art according to specific actual requirements.

In addition, the present application further provides an electrical apparatus. The electrical apparatus comprises the secondary battery provided by the present application. The secondary battery can be used as a power source for the electrical apparatus and can also be used as an energy storage unit for the electrical apparatus. The electrical apparatus can include, but is not limited to, a mobile apparatus (for example, a mobile phone or a laptop), an electric vehicle (for example, an all-electric vehicle, a hybrid electric vehicle, a plug-in hybrid electric vehicle, an electric bicycle, an electric scooter, an electric golf cart, or an electric truck), an electric train, a ship, a satellite, an energy storage system, etc.

For the electrical apparatus, the secondary battery can be selected according to the requirements during use.

FIG. 3 is an electrical apparatus 2 as an example. This electrical apparatus is an all-electric vehicle, a hybrid electric vehicle, or a plug-in hybrid electric vehicle, etc.

As another example, the apparatus may be a mobile phone, a tablet personal computer, a laptop, etc.

### Examples

To make the technical problems to be solved by the present application, the technical solutions, and the beneficial effects clearer, the present application is further described below in detail with reference to examples and the accompanying drawings. It is clear that the described embodiments are only some, rather than all, of the embodiments of the present application. The following description of at least one exemplary embodiment is actually merely illustrative and by no means constitutes any limitation on the present application and the use thereof. All other embodiments obtained by those of ordinary skill in the art based on the embodiments of the present application without involving any creative effort shall fall within the scope of protection of the present application.

In embodiments in which no specific technologies or conditions are specified, technologies or conditions described in the literature in the art or product specifications are followed. The reagents or instruments used without manufacturer indicated are all commercially available conventional products.

### Example 1

A preparation method for the silicon composite material in the example includes the following.

A silicon-based material silicon-carbon composite and flexible material graphite were added into deionized water, stirred and dispersed evenly to obtain a dispersion. The dispersion was spray-dried using a spray dryer. A solid material obtained by spray drying was subjected to carbon covering in a gas carbon source atmosphere. The silicon composite material of this example was obtained.

### Example 2-Example 17

Compared to Example 1, Example 2-Example 17 were different in that compositions of the silicon composite materials were different, specifically as shown in Table 1.

### Example 18

Compared to Example 1, this example was different in that the graphite was replaced with soft carbon.

### Example 19

Compared to Example 1, this embodiment was different in that a silicon-carbon composite is replaced with a silicon-oxygen compound in which the mass percentage of silicon in the silicon-oxygen compound was 50%.

### Example 20

Compared to Example 1, this embodiment was different in that a silicon-carbon composite is replaced with a silicon-nitrogen compound in which the mass percentage of silicon in the silicon-nitrogen compound was 50%.

A preparation method for a secondary battery was as follows.

### (1) Preparation of positive electrode plate

A positive electrode material LiNi_{0.8}Co_{0.1}Mn_{0.1}O₂, a conductive agent acetylene black, and a binder polyvinylidene fluoride (PVDF) were mixed evenly according to a mass ratio of 97:2:1 and added to the solvent N-methyl pyrrolidone (NMP), to prepare a positive electrode slurry; the positive electrode slurry was uniformly applied on the positive electrode current collector aluminum foil, then dried at 85°C, cold-pressed, then die-cut and slit to prepare the positive electrode plate.

### (2) Preparation of negative electrode plate

A negative electrode active substance, a conductive agent acetylene black, a thickener sodium carboxymethylcellulose, a binder butadiene styrene rubber were added into a solvent water at a mass ratio of 96:2:1:1, mixed evenly, and made into a negative electrode slurry. The negative electrode slurry was evenly applied on a negative electrode current collector copper foil, dried at 85°C and then cold-pressed with 40 tons of pressure, wherein the cold pressing adopted a cylindrical cold pressing roller for cold pressing, a cold pressing speed was 20 meters per minute (m/min), a temperature was 25°C, and the negative electrode plate was made.

The negative electrode active substance in the example was the silicon composite material in the corresponding example.

The negative electrode active substance in Comparative example 1 was a silicon-carbon composite.

The negative electrode active substance in Comparative example 2 was graphite.

### (3) Preparation of separator

A polyethylene microporous thin film was used as a porous separator substrate, and inorganic aluminum trioxide powder, polyvinylpyrrolidone, and acetone as a solvent were uniformly mixed in a weight ratio of 3:1.5:5.5 to prepare a slurry, and the slurry was applied to one surface of the substrate and dried to obtain a separator.

### (4) Preparation of electrolyte solution

The LiPF6 lithium salt was dissolved in the mixed solvent of the ethylene carbonate, the dimethyl carbonate and the methyl ethyl carbonate (the volume ratio of the ethylene carbonate, the dimethyl carbonate and the methyl ethyl carbonate was 1:2:1), and the fluoroethylene carbonate (FEC) additive was added to obtain the electrolyte solution. The concentration of LiPF6 in the electrolyte solution was 1 mol/L, and the mass percentage content of FEC was 5wt%.

### (5) Preparation of secondary battery

The positive electrode plate, the positive electrode plate, and the separator are wound to obtain a bare cell, followed by packaging, solution injection, formation, exhausting, and other processes to obtain the corresponding secondary battery.

### Test example:

(1) Tests are performed on the structural stability of the negative electrode plates in examples and comparative examples.
a: a scanning electron microscope (SEM) was used to observe vertical cross sections of the negative electrode plates in examples and comparative examples, a depth H of the active substance embedded in the current collector was measured, and measurement results were as shown in Table 1. H can be used to indicate the extent of damage of the negative electrode current collector, the higher H value indicated that the damage of the negative electrode current collector was more serious.
b: Elongation at break tests were performed on the negative electrode plates in examples and comparative examples. The cold-pressed negative electrode plate was taken, punched and made into a sample in a 50 millimeters (mm)*15 mm strip shape by a die cutter, wherein the direction of 50 mm was the processing direction of the electrode plate, namely the movement direction of the electrode plate relative to the cold pressing roller. A high speed iron tensile machine was used for the tensile experiment, the two ends of the tensile machine needed furrow tape to be tightly bonded, to prevent the loosing and falling of the electrode plate during the stretching, the sample was kept vertical and straight during the stretching, the sample needed to be fractured at some place in the middle, and the fracture data at the two ends of a clamp was discarded. A stretching speed was 2 millimeters per minute (mm/min). The initial length of the negative electrode plate was L₀, that is, 50 mm, the length of the tensile fracture in the length direction was L₁, the elongation at break was λ=(L₁-L₀)/L₀. The test results were shown in Table 1.

(2) The volumetric energy density (VED) of the secondary batteries in the examples and comparative examples was tested. The battery was allowed to stand in a constant temperature environment of 25°C for 2h, then charged to 4.2 V at 2.8 volts (V)-4.2 V at 0.33 coulombs (C), then charged at 4.2 V with a constant voltage to a current ≤0.05 C, left for 10 min, then discharged at 0.33 C to 2.8 V, and a capacity C0 of this battery was recorded. VED was a ratio of C0 to the volume of the battery case. The test results were shown in Table 1.
(3) The cycle performance of the secondary batteries in the examples and comparative examples was tested. The testing method was that: under 25°C, the battery to be tested was continuously charged and discharged in the 0-100%SOC interval according to 0.5 C, and the battery was left to stand for 30 min at the end of each charge and discharge. Until the battery cycles to 300 cycles, the discharge capacity of the n-th cycle was recorded as Cₙ, wherein the discharge capacity of the first cycle was recorded as C₁, and the capacity retention rate of the n-th cycle=(Cₙ/C₁)×100%, wherein for cycling 300 cycles at 25°C, capacity retention rate=(C₃₀₀/C₁)×100. The test results were shown in Table 1.

**Table 1**

| | Material | | | Dv50 of silicon-based material | Dv50 of flexible material | Flexible material: silicon-based material | Thickness of carbon covering layer | Silicon composite material | | | Negative electrode plate | | Embed ded depth H | Elongat ion at break λ | Secondary battery | |
|---|---|---|---|---|---|---|---|---|---|---|---|---|---|---|---|---|
| | | | | | | | | Dv50 | Tap densit y | Specifi c surfac e area | Compa cted density | Expans ion rate | | | Volum etric energy density | Cycle perfor mance |
| | Porous carbon | | Silicon wafer | | | | | | | | | | | | | |
| | BET | Pore size | Percent | | | | | | | | | | | | | |
| Example 1 | 1000 | 30 | 40% | 4 | 2 | 60:40 | 10 | 20 | 1.1 | 1 | 1.5 | 40% | 0 | 3.6% | 738 | 92.0% |
| Embodiment 2 | 1800 | 50 | 60% | 4 | 2 | 60:40 | 10 | 20 | 1.2 | 1.5 | 1.3 | 50% | 0 | 3.6% | 720 | 91.7% |
| Embodiment 3 | 500 | 2 | 20% | 4 | 2 | 60:40 | 5 | 20 | 0.9 | 0.8 | 1.5 | 40% | 0 | 3.6% | 738 | 92.3% |
| Example 4 | 1000 | 30 | 40% | 7 | 5 | 60:40 | 60 | 20 | 1.1 | 1 | 1.5 | 40% | 0 | 3.6% | 738 | 92.1% |
| Example 5 | 1000 | 30 | 40% | 2 | 1 | 60:40 | 10 | 20 | 1.1 | 1 | 1.5 | 40% | 0 | 3.6% | 738 | 91.8% |
| Example 6 | 1000 | 30 | 40% | 7 | 2 | 60:40 | 10 | 20 | 1.1 | 1 | 1.5 | 40% | 0 | 3.6% | 738 | 92.2% |
| Example 7 | 1000 | 30 | 40% | 2 | 5 | 60:40 | 10 | 20 | 1.1 | 1.2 | 1.5 | 40% | 0.7 | 2.1% | 738 | 91.0% |
| Embodiment 8 | 1000 | 30 | 40% | 10 | 2 | 60:40 | 10 | 20 | 1.1 | 1 | 1.5 | 40% | 1.2 | 1.4% | 738 | 91.9% |
| Example 9 | 1000 | 30 | 40% | 4 | 0.5 | 60:40 | 10 | 20 | 1.1 | 1 | 1.5 | 40% | 1.1 | 1.5% | 738 | 92.0% |
| Example 10 | 1000 | 30 | 40% | 4 | 2 | 90:10 | 10 | 20 | 1.1 | 0.8 | 1.5 | 22% | 0 | 3.6% | 745 | 95.0% |
| Example 11 | 1000 | 30 | 40% | 4 | 2 | 40:60 | 10 | 20 | 1.1 | 1 | 1.4 | 62% | 0 | 3.6% | 726 | 90.1% |
| Example 12 | 1000 | 30 | 40% | 4 | 2 | 95:5 | 10 | 20 | 1.1 | 0.75 | 1.65 | 20% | 0 | 3.6% | 684 | 95.8% |
| Example 13 | 1000 | 30 | 40% | 4 | 2 | 50:50 | 10 | 20 | 1.2 | 0.9 | 1.5 | 42% | 0 | 3.6% | 741 | 91.2% |
| Example 14 | 2000 | 50 | 60% | 4 | 2 | 60:40 | 10 | 20 | 0.9 | 1.7 | 1.2 | 65% | 0 | 3.6% | 702 | 89.0% |
| Example 15 | 450 | 2 | 20% | 4 | 2 | 60:40 | 10 | 20 | 0.9 | 0.8 | 1.55 | 37% | 0 | 3.6% | 716 | 91.0% |
| Example 16 | 1000 | 80 | 40% | 4 | 2 | 60:40 | 10 | 20 | 0.75 | 1 | 1.25 | 26% | 0 | 3.6% | 709 | 93.2% |
| Example 17 | 1000 | 30 | 40% | 4 | 2 | 60:40 | 80 | 20 | 1.1 | 1 | 1.5 | 40% | 0 | 3.6% | 738 | 89.2% |
| Example 18 | 1000 | 30 | 40% | 4 | 2 | 60:40 | 10 | 20 | 1.1 | 1 | 1.5 | 40% | 0 | 3.5% | 721 | 90.0% |
| Example 19 | / | / | 50% | 4 | 2 | 60:40 | 10 | 20 | 1.15 | 1 | 1.55 | 45% | 0 | 3.7% | 716 | 89.8% |
| Example 20 | / | / | 50% | 4 | 2 | 60:40 | 10 | 20 | 1.16 | 1 | 1.58 | 43% | 0 | 3.6% | 719 | 91.2% |
| Comparative example 1 | 1000 | 30 | 40% | 7 | / | / | 10 | 7 | 0.65 | 6 | 1.4 | 50% | 2.5 | 1.2% | 672 | 87.9% |
| Comparative example 2 | / | / | / | / | 13 | / | / | / | / | / | 1.75 | 20% | 0 | 3.8% | 615 | 96.3% |

In Table 1, BET represents the specific surface area of the porous carbon material in unit of m²/g. The pore size represents the pore diameter of the pores of the porous carbon material, in unit of nm. The percentage of silicon represents the mass percentage of silicon in the silicon-based material. The unit of Dv50 of the silicon-based material is µm. The unit of Dv50 of graphite is µm. Graphite:silicon-based material represents the mass ratio of the graphite to the silicon-based material. The unit of the thickness of the carbon covering layer is nm. The unit of Dv50 of the silicon composite material is µm. The unit of the tap density of the silicon composite material is g/cm³. The unit of the specific surface area of the silicon composite material is m²/g. The unit of the compacted density of the silicon composite material is g/cm³. The embedded depth represents the depth of the active substance embedded in the current collector in unit of µm. The unit of the volumetric energy density of the secondary battery is watt-hour/liter (Wh/L).

In Table 1, it can be seen from the comparison of Example 1 and Comparative example 1 that compared to the silicon-carbon composite as the negative electrode active substance, when the negative electrode active substance includes the silicon-carbon composite and graphite, the damage of the negative electrode current collector in the preparation of the negative electrode plate is less and the volumetric energy density of the battery is higher.

It can be seen from the comparison of Example 1 and Comparative example 2 that the volumetric energy density of the battery is high when the negative electrode active substance includes the silicon-carbon composite and graphite, compared to graphite as the negative electrode active substance.

From the comparison of Example 1 and Example 7, it can be seen that when the Dv50 of the silicon-carbon composite in Example 7 is less than the Dv50 of the graphite, there is some damage to the negative electrode current collector and the cycle performance is low.

From the comparison of Example 1, Example 8, and Example 9, it can be seen that when the Dv50 of the silicon-carbon composite is larger or the Dv50 of the graphite is smaller, the damage of the negative electrode current collector is larger when the negative electrode plate is prepared.

From the comparison of Example 1 and Example 14, it can be seen that the corresponding cycle performance of the battery in Example 14 is lower, which may be due to the larger specific surface area of the silicon-carbon composite, and the excessive pores leading to the aggravation of the side reaction, which reduces the cycle performance of the battery. In addition, the specific surface area of the silicon-carbon composite in Example 14 is larger, the corresponding compacted density is smaller, and the volumetric energy density of the battery is smaller.

From the comparison of Example 1 and Example 15, it can be seen that the corresponding cycle performance of the battery in Example 15 is lower, possibly due to the smaller specific surface area of the silicon-carbon composite, part of the elemental silicon is located on the particle surface of the silicon-carbon composite, and the higher activity of the elemental silicon may deteriorate the cycle performance to a certain extent.

From the comparison of Example 1 and Example 16, it can be seen that the compacted density is smaller and the volumetric energy density of the battery is smaller when the pore size of the porous carbon in the silicon-carbon composite is larger.

It can be seen from the comparison of Example 1 and Example 17 that the cycle performance of the battery is lower when the thickness of the carbon covering layer is larger.

The technical features of the above examples may be combined in any way, and all possible combinations of the technical features of the above examples have not been described for the sake of conciseness of description. However, as long as there is no contradiction in the combinations of these technical features, they should all be considered to be within the scope recorded in this specification.

The foregoing embodiments only describe several implementations of the present application, which are described relatively specifically and in detail, and thus, cannot be construed as a limitation to the scope of patent of the present invention. It should be noted that for those of ordinary skill in the art, a plurality of transformations and improvements can also be made without departing from the idea of the present application. These transformations and improvements all fall within the scope of protection of the present application. Therefore, the scope of protection of the patent of the present application shall be subject to the appended claims.

## Claims

1. A silicon composite material, comprising a silicon-based material and a flexible material, wherein hardness of the flexible material is less than hardness of the silicon-based material; the silicon-based material comprises at least one of elemental silicon, a silicon-oxygen compound, a silicon-carbon composite, a silicon-nitrogen composite, and a silicon alloy; and the flexible material is located on at least part of a surface of the silicon-based material.

2. The silicon composite material according to claim 1, wherein the flexible material comprises a flexible conductive material.

3. The silicon composite material according to claim 2, wherein the flexible conductive material comprises at least one of graphite and soft carbon.

4. The silicon composite material according to any one of claims 1-3, wherein Dv50 of the flexible material is ≤ Dv50 of the silicon-based material.

5. The silicon composite material according to claim 4, wherein the Dv50 of the flexible material is 1 µm-5 µm.

6. The silicon composite material according to claim 4 or 5, wherein Dv50 of the silicon-based material is 2 µm-7 µm.

7. The silicon composite material according to any one of claims 1-6, wherein the silicon-based material and the flexible material are both granular materials, and the flexible material is distributed in a granular form on at least part of the surface of the silicon-based material.

8. The silicon composite material according to any one of claims 1-7, wherein a mass ratio of the flexible material to the silicon-based material is (1-9):1.

9. The silicon composite material according to any one of claims 1-8, wherein the silicon-carbon composite comprises a porous carbon material and elemental silicon located in pores of the porous carbon material.

10. The silicon composite material according to claim 9, wherein a specific surface area of the porous carbon material is 500 m²/g-1800 m²/g.

11. The silicon composite material according to claim 9 or 10, wherein a pore size of the pores of the porous carbon material is 2 nm-50 nm.

12. The silicon composite material according to any one of claims 9-11, wherein a mass percentage of the elemental silicon in the silicon-carbon composite is 20%-60%.

13. The silicon composite material according to any one of claims 1-12, wherein the silicon composite material further comprises a covering layer, the covering layer contains at least one of carbon and a metal oxide, and the covering layer fully covers or partially covers the silicon-based material and the flexible material.

14. The silicon composite material according to claim 13, wherein the metal oxide comprises at least one of alumina and titanium dioxide.

15. The silicon composite material according to claim 13 or 14, wherein a thickness of the covering layer is 5 nm-60 nm.

16. The silicon composite material according to any one of claims 1-15, wherein Dv50 of the silicon composite material is 8 µm-40 µm.

17. The silicon composite material according to any one of claims 1-16, wherein a tap density of the silicon composite material is 0.9 g/cm³-1.2 g/cm³.

18. The silicon composite material according to any one of claims 1-17, wherein a specific surface area of the silicon composite material is 0.8 m²/g-1.5 m²/g.

19. A preparation method for a silicon composite material, comprising the following steps:
mixing a silicon-based material, a flexible material, and a solvent to obtain a dispersion; wherein hardness of the flexible material is less than hardness of the silicon-based material; the silicon-based material comprises at least one of elemental silicon, a silicon-oxygen compound, a silicon-carbon composite, a silicon-nitrogen composite, and a silicon alloy; and
spray-drying the dispersion.

20. The preparation method for the silicon composite material according to claim 19, wherein a solid content of the dispersion is 1%-40%.

21. The preparation method for the silicon composite material according to claim 19 or 20, wherein a temperature of hot air for spray drying is 150°C-200°C.

22. The preparation method for the silicon composite material according to any one of claims 19-21, wherein a flow rate of the hot air for the spray drying is 0.08 m³/min-0.2 m³/min.

23. A negative electrode plate, comprising a negative electrode current collector and a negative electrode film layer located on at least one surface of the negative electrode current collector; wherein the negative electrode film layer contains a silicon composite material according to any one of claims 1-18 or the silicon composite material prepared by the preparation method according to any one of claims 19-22.

24. The negative electrode plate according to claim 23, wherein a compacted density of the negative electrode plate is 1.3 g/cm³-1.75 g/cm³.

25. The negative electrode plate according to claim 23 or 24, wherein a full charge expansion rate of the negative electrode plate is 22%-50%.

26. A secondary battery, comprising the negative electrode plate according to any one of claims 23-25.

27. An electrical apparatus, comprising the secondary battery according to claim 26.
